# EUROPEAN PATENT SPECIFICATION

(11) **EP 0 733 390 B1**
(45) Date of publication and mention of the grant of the patent: **12.09.2001**
(21) Application number: 96301839.5
(22) Date of filing: 19.03.1996
(51) Int. Cl.: B01D 8/00, B01D 5/00

(54) **Cryogenic vapour recovery process and system**
Verfahren und System zur kryogenen Dampfrückgewinnung
Procédé et système de récupération cryogénique de vapeur

(30) Priority: 21.03.1995 US 407818
(43) Date of publication of application: 25.09.1996
(73) Proprietor: THE BOC GROUP, INC., Murray Hill, New Providence, New Jersey 07974 (US)
(72) Inventor: Lee, Ron C., Bloomsbury, New Jersey 08805 (US); Downey, Michael T., Bridgewater, New Jersey 08807 (US); Heil, Michael D., Hoboken, New Jersey 07030 (US); Barrasso, Michael J., Westfield, New Jersey 07090 (US)
(74) Representative: Wickham, Michael

(56) References cited:
- EP-A- 0 275 472
- DE-A- 3 634 612

## Description

The present invention relates to a cryogenic vapour recovery process and system (apparatus) for removing condensable vapours from a gas stream by condensation. More particularly, the present invention relates to such a process and apparatus in which refrigeration for the condensation is provided by a cryogenic refrigerant and the refrigeration imparted to the gas stream by the cryogenic refrigerant is at least partly recovered (with two condensers are operated out of phase so that one of the condensers is on-line and operating to condense the vapours out of the gas stream while the other condenser is off-line and is being defrosted prior to being brought on-line.)

Cryogenic vapour recovery systems for removing condensable vapours contained within a gas stream are known. An example of such a system is disclosed in US 5,291,751, in which condensable vapours contained within a gas stream are removed from the gas stream by a hybrid system. In this hybrid system, the gas stream first passes through one or more mechanical refrigeration stages and then is routed to two cryogenic refrigeration stages having cryogenic heat exchangers to condense the condensable vapours from the gas stream. The two cryogenic refrigeration stages are operated out of phase so that when one heat exchanger is fully loaded up with solid condensate, the operation is switched to the other heat exchanger, and vice-versa to allow each of the heat exchangers to operate as condensers while the opposite heat exchanger is defrosted. US 3,967,938 shows a cryogenic vapour recovery system, specifically designed to condense gasoline vapours from a gasoline tank, which utilises propane as the refrigerant.

Another example of a cryogenic vapour recovery system is illustrated in US 5,291,738 in which the gas stream passes through a mechanical chiller, an economising heat exchanger, a main condenser which is refrigerated by a liquid nitrogen loop, and a mist eliminator. The refrigeration imparted to the gas stream by the nitrogen loop is at least partly recovered in the economising heat exchanger where heat is indirectly exchanged between the gas stream as it enters the system with the gas stream prior to its discharge from the system. The main condenser is defrosted by recirculating part of the gas stream after having been heated through a heater. Since the defrosting requires a system shut-down, duplicate systems would have to be operated in order to provide continuous operation. US 5,291,738, as contrasted with the foregoing reference patents, recognises that refrigeration is imparted to the gas stream and if the gas stream is not recirculated, the refrigeration is lost. However, since the refrigeration is recovered upstream of the condenser, freezing of the condensables can occur before the condensers to cause blockage of the system. DE-A-3634612 discloses a process for removing condensable vapours from a gas stream. A cryogen is used to cool the refrigerant exiting the condenser.

It is an aim of the present invention to provide a cryogenic vapour recovery method and system in which refrigeration from the gas to be processed is at least partly recovered in such a manner that the system is capable of being to be designed for continuous operation without duplication of the entire system and in which the freezing of the condensables is constrained to occur within condensers used in connection with the system.

According to the present invention there is provided a cryogenic vapour recovery process for removing condensable vapours from a gas stream containing the vapours, the process comprising:
passing a refrigerant stream around a circuit in which in a first location the refrigerant stream condenses the condensable vapours from the gas stream by indirect heat exchange with the gas stream, thereby producing a refrigerated gas stream, the refrigerant stream being heated in the heat exchange, and in a second location at least part of the heated refrigerant stream is recooled by indirect heat exchange with the refrigerated gas stream;
employing a cryogenic stream to provide refrigeration to the refrigerant stream, characterised in that
a cryogenic stream is combined with at least part of the recooled refrigerant stream downstream of the second location and upstream of the first location.

The cryogenic stream may be of a liquid or gaseous cryogen or a stream having a mixture of liquid and gaseous phases of a cryogen.

The invention also provides a cryogenic vapour recovery system for removing from a gas stream condensable vapours contained within the gas stream, said system comprising:
condensing means for indirectly exchanging heat from said gas stream to a refrigerant stream, thereby to condense said condensable vapours from said gas stream and to produce a refrigerated gas stream and a heated refrigerant stream;
an economising heat exchanger connected to said condensing means for exchanging further heat from at least part of said heated refrigerant stream to said refrigerated gas stream and thereby recooling the refrigerant stream;
means for passing the refrigerant around a circuit comprising the condensing means and the economising heat exchanger, characterised in that the system additionally comprises an inlet to the circuit for a cryogenic stream to be combined with the recooled refrigerant stream, said inlet being arranged downstream of the economising heat exchanger and upstream of condensing means.

The present invention is very suitable for incorporation within the design of cryogenic vapour recovery systems utilising a plurality of condensers for continuous operation because refrigeration is recovered in the refrigerant stream rather than in the gas stream to be processed. Moreover, since refrigeration is recovered downstream of the condensers and is then recovered in the refrigerant stream, there is no possibility of premature freezing of the condensables occurring upstream of the condensers.

The method and apparatus according to the invention will now be described by way of example with reference to the accompanying drawings, in which:
Figure 1 is a schematic diagram of a cryogenic vapour recovery system in accordance with the present invention; and
Figure 2 is a schematic diagram of an alternative embodiment of a cryogenic vapour recovery system in accordance with the present invention.

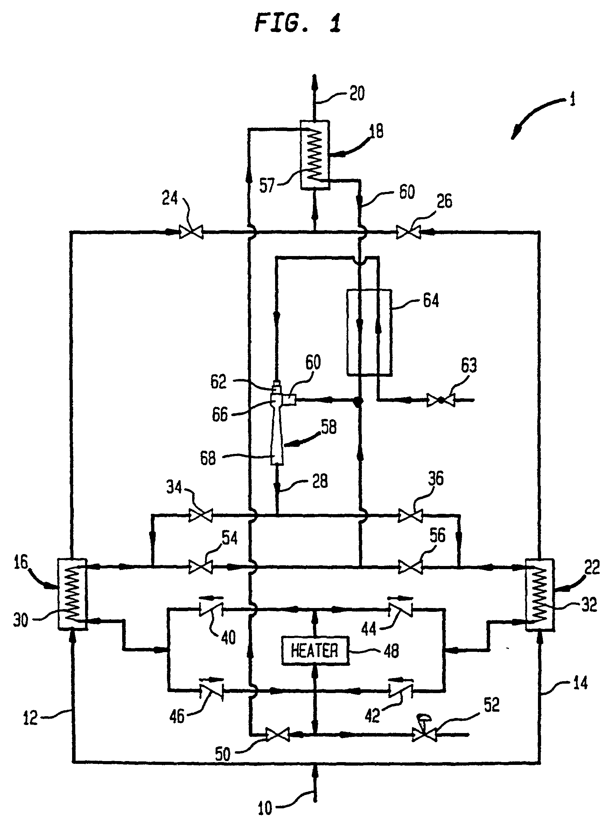

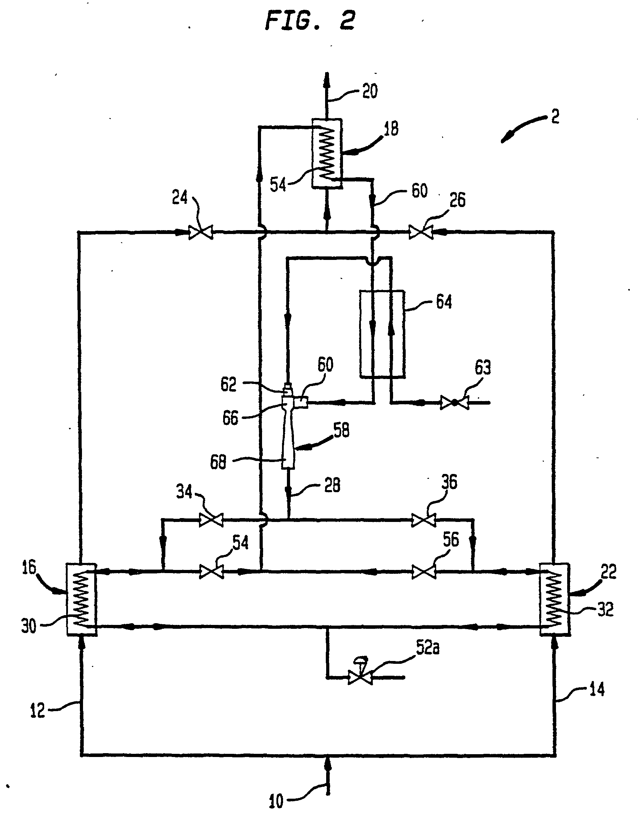

The same reference numerals are used to identify like parts in Figures 1 and 2.

With reference to Figure 1., a cryogenic vapour recovery system 1 is illustrated which is designed to remove condensable vapours from a gas stream. Although not illustrated, the gas stream could be pre-refrigerated by a mechanical refrigerator or other refrigeration means. For instance pre-refrigeration could be effected with a cold refrigerant gas used in cryogenic vapour recovery system 1. The system 1 employs a circulating refrigerant comprising the gaseous phase of the cryogen.
The gas stream, upstream of treatment in system 1 includes the condensable vapours. The untreated gas stream enters system 1 through a system inlet 10 and can then flow through either of two alternate flow paths 12 or 14. In flow path 12, the gas stream flows through a condenser 16 and then through an economising heat exchanger 18. Condensable vapour is removed from the gas stream in condenser 16 and refrigeration that is imparted to the gas stream in condenser 16 is at least partly recovered in economising heat exchanger 18. As can be appreciated, since condensable vapours are being removed from the gas stream within condenser 16, only part of the refrigeration can be recovered. The gas stream, now treated by removal of the condensable vapours, is discharged from system 1 through system outlet 20. In flow path 14, the gas stream flows through condenser 22 to condense out condensable vapours and then through economising heat exchanger 18 for recovery of refrigeration. Thereafter, the gas stream is discharged from system 1 through system outlet 20.

As can be appreciated, depending upon the type of gas stream to be treated, part or all of the condensable vapours will form as frost on condensers 16 and 22. In this regard, in most applications, a major portion of the condensable vapours will condense as liquid. Therefore, although not illustrated, condensers 16 and 22 are provided with a drainage system. A point will be reached, however, where each of the two condensers 16 and 22 has to be defrosted in order to continue in operation. The alternative flow paths, discussed above, allow for continuous operation by permitting one of the two condensers 16 and 22 to remain on-line while the other of the two condensers 16 and 22 is off-line and is being defrosted. After the defrosting of the other of the two condensers 16 and 22, the formerly off-line condenser comes on-line while the condenser previously on-line condition is brought off-line and is defrosted.

Flow through alternate flow paths 12 and 14 is controlled by on-off control valves 24 and 26. When valve 24 is set in the open position and valve 26 is set in the closed position, the gas stream flows through flow path 12. When valve 26 is set in the open position and when valve 24 is set in the closed position, the gas stream flows through flow path 14. Valves 24 and 26 are preferably the type that are activated for remote operation from automated control systems such as a programmable controller, either digital or analog. It is of course possible to carry out the method according to the present invention employing manually operable valves instead of automatically operated cones. Unless indicated otherwise, all valves herein are on-off valves except where such valves are indicated as being check valves to control flow direction.

Condensation of the condensable vapours within either condenser 16 or condenser 22 is effected by a refrigerant stream which flows along a reversible flow circuit having an inlet 28 and valving for introducing the refrigerant stream alternately into pass 30 of condenser 16 and into pass 32 of condenser 22. When condenser 16 is on-line, valve 34 is set in an open position and valve 36 is set in a closed position with the result that the refrigerant stream flows through pass 30 of condenser 16 and is thereby heated. Check valves 40, 42, 44 and 46 act in concert to permit flow of a portion of the heated refrigerant stream from condenser 16 through check valve 46 and a heater 48 of conventional construction, check valve 44 and then into pass 32 of condenser 22. Condenser 22 is off-line and the heated refrigerant acts to defrost condenser 22 as is thereby cooled itself. As will be discussed in more detail, a valve 50 is set in an open position to direct a part of a remaining portion of the heated refrigeration stream to economising condenser 18 and a pressure relief valve 52 acts to vent another part of the remaining portion of the heated refrigerant stream from system 1. As will also be discussed in more detail hereinafter, a valve 54 is set in a closed position while a valve 56 is set in an open position to direct the portion of the refrigeration stream, after (i.e. downstream of) its passage through pass 32 of condenser 22 to an ejector 58, which will also be described in more detail hereinafter, for purposes of refrigeration recovery.

After condenser 22 is defrosted and/or after condenser 16 requires defrosting for continued operation, valve 34 is set in the closed position and valve 36 is set in the open position to allow the refrigerant stream to reverse its direction and now flow through pass 32 of now on-line condenser 22 with the result that the condenser 22 is cooled and the refrigerant stream is heated. The cooling of the condenser 22 effects condensation/freezing of condensable vapours from the gas stream. A portion of the heated refrigerant stream flows from condenser 22 through check valve 42, heater 48, check valve 40 and pass 30 of now off-line condenser 16. The condenser is thus defrosted by the heated refrigerant. Again valve 50 is set in an open position for the purpose mentioned above (direction of part of the heated refrigerant stream to economising condenser 16) and a pressure relief valve 52 acts as a system vent Valve 54 is now set in an open position and valve 56 is set in a closed position to direct the portion of the heated refrigeration stream, after its passage through pass 30 of now off-line condenser 16 to the ejector 58.

In the illustrated embodiment, only a portion of the heated refrigerant stream needs to perform a defrosting duty. As mentioned above, another part of the remaining heated refrigerant stream flows through the valve 50 and from there through a pass 57 in economising heat exchanger 18 where it is cooled to recover a portion of the refrigeration imparted to gas stream by passage of the refrigerant stream through condensers 16 or 22. The other remaining portion of the heated refrigerant stream is vented through the pressure relief valve 52 at a mass flow rate equal to the mass flow rate of liquid cryogen make-up entering the vapour recovery system 1.

The flow of the refrigerant stream from condenser 16 or 22 during defrosting thereof is mixed with the refrigerant stream that has been cooled within economising heat exchanger 18 upstream of the ejector 58. The resultant mixture combines with an incoming cryogenic stream in the ejector 58 to form the refrigerant stream to be introduced into inlet 28 of the reversing flow circuit, described above.

The valve 50 can be a proportional valve instead of an on/off valve. In such case closing valve 50 causes more heated refrigerant to be utilised for defrosting purposes rather than refrigeration recovery within economising heat exchanger 18. Valves 54 and 56 can also be proportional valves so as to adjust the balance between flow of heated refrigerant between condensers 16 and 22 and economising heat exchanger 18.

Prior to the switch over between on-line and off-line conditions for either of condensers 16 or 22, both valves 34 and 36 can be set in an open position and both valves 54 and 56 can be set in the closed position. This will cause the refrigerant stream to be divided into two portions. If, for instance, condenser 16 were on-line and condenser 22 were off-line, the portion entering condenser 16 would continue to act in a condensing duty. The portion of the refrigerant stream entering condenser 22 would be serving a pre-cooling duty, the defrosting of condenser 22 having just been completed. The two portions of the refrigerant stream after having passed through condensers 16 and 22 will form two partial heated refrigerant streams flowing through check valves 46 and 42 to thereafter combine to form a combined heated refrigerant stream to be in part recycled to economising heat exchanger 18 through valve 50 which is set in an open position for this purpose and in part be vented from valve 52.

The ejector 58 causes circulation of the refrigerant as described hereinabove. The ejector 58 has a low pressure inlet 60 for the combined refrigerant streams. A high pressure inlet 62 is provided for introduction of a cryogenic stream. A pressurised liquid cryogen (e.g. liquid nitrogen) stream enters system I through control valve 63. Enthalpy can be added to the incoming pressurised liquid cryogen via a recirculation heat exchanger 64 which serves indirectly to exchange heat between liquid cryogen stream 62 and the cooled refrigerant stream emanating from economising heat exchanger 18. The result of such heat exchange is that the cryogenic stream entering high pressure inlet 62 can be either liquid, gas or a two-phase mixture of liquid and gas. The increase in enthalpy increases the circulation work capable of being produced by the incoming liquid cryogen. Ejector 58 has a mixing chamber 66 in which the cryogenic stream is injected through a venturi. This creates a low pressure region within mixing chamber 66 to draw the combined refrigerant streams the cryogenic stream. Downstream of pressure recovery via a diffuser section 68 of ejector 58, the resultant refrigerant stream is discharged to inlet 28 of the reversing circuit.

As can be appreciated by those skilled in the art, ejector 58 can be replaced by any venturi-like device in which a cryogenic stream is able to serve as a motive fluid to produce a low pressure region to draw in the refrigerant streams. Ejector 58 can also be replaced or possibly supplemented by a circulation pump with a prime mover to circulate the refrigerant and a piping tee to serve as a mixing chamber. The advantage of ejector 58 over the circulation pump is in its simplicity of operation, there being no external power consumption as would be required with a pump. Additionally, a pump acts as an input to system 1 of sensible heat.

Many possible alternative embodiments could be employed in accordance with the present invention. For instance, depending on the application for the present invention a heater, such as heater 48 might not be necessary. Also, all of the heated refrigerant stream could flow through the condenser to be defrosted and then to economising heat exchanger 18. In any embodiment, venting of refrigerant could be either upstream or downstream of economising heat exchanger 18. With reference to Figure 2, there is shown a cryogenic vapour recovery system 2 without check valves. No pre-cooling of the condensers and no recirculation directly to ejector 58 of cooled refrigerant which has completed a defrosting duty in condenser 16 or condenser 22 is possible in system 2. Operation of valves 54 and 56 causes all of the heated refrigerant stream, after having served the defrosting duty, to be sent in the direction of economising heat exchanger 18. Part of the flow of heated refrigerant stream is vented through pressure relief valve 52a, located between condensers 16 and 22. Venting could also be effected either upstream or downstream of economising heat exchanger 18. This would be less advantageous than the illustrated placement of vent 52a. The present invention also covers a possible embodiment in which there is a single condenser. In such possible embodiment, there would have to be system duplication if there is to be continuous operation.

In any embodiment in accordance with the present invention it is preferable that the refrigerant stream comprise mostly vapour through complete vaporisation of the incoming liquid cryogen make-up stream so that vaporisation does not occur in either of condensers 16 and 22. The use of a refrigerant stream made up of vapour allows for there to be a closer match between the heating and cooling curves of the refrigerant and the process gas within condensers 16 and 22. This match produces an efficiency in operation which can be translated into a better condensing efficiency than prior art systems in which incoming liquid cryogen vaporises within the condensers. This type of operation, possible in the present invention, is yet another advantage of the present invention over the prior art.

## Claims

1. A cryogenic vapour recovery process for removing condensable vapours from a gas stream containing the vapours, the process comprising:
passing a refrigerant stream around a circuit in which in a first location the refrigerant stream condenses the condensable vapours from the gas stream by indirect heat exchange with the gas stream, thereby producing a refrigerated gas stream, the refrigerant stream being heated in the heat exchange, and in a second location at least part of the heated refrigerant stream is recooled by indirect heat exchange with the refrigerated gas stream;
employing a cryogenic stream to provide refrigeration to the refrigerant stream , **characterised in that** a cryogenic stream is combined with at least part of the recooled refrigerant stream downstream of the second location and upstream of the first location.

2. A process according to claim 1, **characterised in that** the cryogenic stream produces a low pressure region in a venturi so as to draw the refrigerant stream into the cryogenic stream.

3. A process according to claim 1 or claim 2, wherein:
the condensation is performed in two condensers and a frost containing at least part of said condensables forms within said two condensers;
said two condensers are operated in accordance with a cycle in which, in turn, each condenser is on-line and operating to effect the condensation and the other condenser is off-line and is defrosted while off-line.

4. A process according to claim 3, wherein each condenser is defrosted while off-line by at least a portion of said heated refrigerant stream.

5. A process according to claim 4, further comprising further heating said portion of the heated refrigerant stream upstream of the off-line condenser.

6. A process according to any one of claims 3 to 5, wherein:
after defrosting the off-line condenser a portion of the recooled refrigerant stream is taken from downstream of its combination with the cryogenic stream and is employed to pre-cool the off-line condenser, the said portion of the recooled refrigerant stream being thereby reheated, and the thus reheated portion is combined with the said heated refrigerant stream upstream of the second step.

7. A process according to claim 4 or claim 5, wherein:
downstream of the defrosting off-line condenser the portion of the heated refrigerant stream is combined with the recooled refrigerant stream.

8. A process according to any one of the preceding claims, additionally including venting from the process refrigerant at a mass flow rate equal to that at which the cryogenic stream enters the process.

9. A process according to any one of the preceding claims, wherein said cryogenic stream is a liquid which is vaporised upon its combination with said recooled refrigerant stream.

10. A cryogenic vapour recovery system (1) for removing from a gas stream condensable vapours contained within the gas stream, said system (1) comprising:
condensing means (16, 22) for indirectly exchanging heat from said gas stream to a refrigerant stream, thereby to condense said condensable vapours from said gas stream and to produce a refrigerated gas stream and a heated refrigerant stream;
an economising heat exchanger (18) connected to said condensing means (16, 22) for exchanging further heat from at least part of said heated refrigerant stream to said refrigerated gas stream and thereby recooling the refrigerant stream;
means (58) for passing the refrigerant stream around a circuit comprising the condensing means (16, 22) and the economising heat exchanger (18); **characterised in that** the system additionally comprises an inlet (62) to the circuit for a cryogenic stream to be combined with the recooled refrigerant stream, said inlet (62) being arranged downstream of the economising heat exchanger and upstream of the condensing means.

11. A cryogenic vapour recovery system according to claim 10, wherein the condensing means (16, 22) comprises a pair of condensers, and the system further includes valve means (24, 26) operable to place each condenser either on or off-line.

12. A cryogenic vapour recovery system according to claim 11, in which the valve means (24, 26) is operable so as to route at the same time the recooled refrigerant stream into one of the condensers (16, 22) which is on line, and at least part of the heated refrigerant stream through the other condenser (16, 22) which is off-line, and so as to switch the routes.

13. A cryogenic vapour recovery system according to claim 12, wherein the off-line condenser route passes through a heater (48) for further heating the said part of the heated refrigerant stream.

14. A cryogenic vapour recovery system according to any one of claims 10 to 13, additionally including a further heat exchanger (64) for heating the cryogenic stream upstream of the inlet (62) by indirect heat exchange with the recooled refrigerant stream.

15. A cryogenic vapour recovery system according to any one of claims 10 to 14, wherein an ejector (58) is able to act as the means for passing the refrigerant and includes the inlet (62).

16. A cryogenic vapour recovery system according to any one of claims 10 to 15, additionally including a valved (52, 52a) outlet for venting a part of the heated refrigerant stream from the system.

## Patentansprüche

1. Kryogener Dampfrückgewinnungsprozeß zum Abscheiden kondensierbarer Dämpfe aus einem die Dämpfe enthaltenden Gasstrom, wobei das Verfahren umfaßt:
Leiten eines Kühlmittelstroms durch einen Kreislauf, in welchem an einer ersten Stelle der Kühlmittelstrom die kondensierbaren Dämpfe aus dem Gasstrom durch indirekten Wärmeaustausch mit dem Gasstrom kondensiert und dadurch einen gekühlten Gasstrom erzeugt, wobei der Kühlmittelstrom durch den Wärmeaustausch erwärmt wird, und in welchem an einer zweiten Stelle mindestens ein Teil des erwärmten Kühlmittelstroms durch indirekten Wärmeaustausch mit dem gekühlten Gasstrom rückgekühlt wird,
Verwenden eines Kryogenstroms zum Erzeugen von Kühlung für den Kühlmittelstrom,
**dadurch gekennzeichnet, daß** der Kryogenstrom mit mindestens einem Teil des rückgekühlten Kühlmittelstroms stromab der zweiten Stelle und stromauf der ersten Stelle kombiniert wird.

2. Verfahren nach Anspruch 1, **dadurch gekennzeichnet, daß** der Kryogenstrom in einer Venturidüse einen Niederdruckbereich erzeugt, um so den Kühlmittelstrom in den Kryogenstrom hineinzuziehen.

3. Verfahren nach Anspruch 1 oder 2, wobei
die Kondensation in zwei Kondensatoren durchgeführt wird und sich in den beiden Kondensatoren ein mindestens einen Teil der genannten kondensierbaren Dämpfe enthaltender Eisansatz bildet,
die beiden Kondensatoren entsprechend einem Zyklus betrieben werden, in welchem wechselweise jeder Kondensator zugeschaltet ist und die Kondensation bewirkt und der jeweils andere Kondensator abgetrennt ist und während seiner Abtrennung abgetaut wird.

4. Verfahren nach Anspruch 3, wobei jeder Kondensator, während er abgetrennt ist, durch mindestens einen Teil des erwärmten Kühlmittelstroms abgetaut wird.

5. Verfahren nach Anspruch 4, das ferner das Erwärmen des genannten Teils des erwärmten Kühlmittelstroms stromauf des abgetrennten Kondensators umfaßt.

6. Verfahren nach einem der Ansprüche 3 bis 5, wobei
nach dem Abtauen des jeweils abgetrennten Kondensators ein Teil des rückgekühlten Kühlmittelstroms von stromab seiner Zusammenführung mit dem Kryogenstrom entnommen und zum Vorkühlen des abgetrennten Kondensators verwendet wird, wodurch der genannte Teil des rückgekühlten Kühlmittelstroms rückerwärmt wird, und wobei der so rückerwärmte Teil mit dem genannten erwärmten Kühlmittelstrom stromauf des zweiten Schritts kombiniert wird.

7. Verfahren nach Anspruch 4 oder 5, wobei
stromab des abgetauten abgetrennten Kondensators der Teil des erwärmten Kühlmittelstroms mit dem rückgekühlten Kühlmittelstroms kombiniert wird.

8. Verfahren nach einem der vorhergehenden Ansprüche, das zusätzlich das Entlüften von Kühlmittel aus dem Prozeß mit einem Massenströmungsdurchsatz umfaßt, der gleich demjenigen ist, mit welchem der Kryogenstrom in den Prozeß eintritt.

9. Verfahren nach einem der vorhergehenden Ansprüche, wobei der Kryogenstrom eine Flüssigkeit ist, die beim Kombinieren mit dem rückgekühlten Kühlmittelstrom verdampft wird.

10. System (1) zum Rückgewinnen von kryogenem Dampf zum Abscheiden von in einem Gasstrom enthaltenen kondensierbaren Dämpfen aus dem Gasstrom, wobei das System (1) aufweist:
Kondensationsmittel (16, 22) zum indirekten Wärmeaustausch des Gasstroms mit einem Kühlmittelstrom, um dadurch die kondensierbaren Dämpfe aus dem Gasstrom zu kondensieren und einen gekühlten Gasstrom und einen erwärmten Kühlmittelstrom zu erzeugen,
einen mit den Kondensationsmitteln (16, 22) verbundenen Sparwärmetauscher (18) zum weiteren Wärmeaustausch von mindestens einem Teil des erwärmten Kühlmittelstroms zu dem gekühlten Gasstrom und dadurch zum Rückkühlen des Kühlmittelstroms,
Mittel (58) zum Leiten des Kühlmittelstroms durch einen Kreislauf, der die Kondensationsmittel (16, 22) und den Sparwärmetauscher (18) enthält, **dadurch gekennzeichnet, daß** das System zusätzlich einen Einlaß (62) in den Kreislauf für einen Kryogenstrom aufweist, der mit dem rückgekühlten Kühlmittelstrom zu kombinieren ist, wobei der Einlaß (62) stromab des Sparwärmetauschers und stromauf der Kondensationsmittel angeordnet ist.

11. System zum Rückgewinnen von kryogenem Dampf nach Anspruch 10, wobei die Kondensationsmittel (16, 22) zwei Kondensatoren umfassen und das System des weiteren Ventilmittel (24, 26) aufweist, die zum wahlweisen Zuschalten und Abtrennen jedes Kondensators betätigbar sind.

12. System zum Rückgewinnen von kryogenem Dampf nach Anspruch 11, wobei die Ventilmittel (24, 26) so betätigbar sind, daß jeweils der rückgekühlte Kühlmittelstrom in einen der Kondensatoren (16, 22), der zugeschaltet ist, geleitet wird, und mindestens ein Teil des erwärmten Kühlmittelstroms durch den anderen Kondensator (16, 22), der abgetrennt ist, geleitet wird, und sie so diese Strömungswege schalten.

13. System zum Rückgewinnen von kryogenem Dampf nach Anspruch 12, wobei der Strömungsweg durch den abgetrennten Kondensator durch einen Heizer (48) zum weiteren Erwärmen des genannten Teils des erwärmten Kühlmittelstroms verläuft.

14. System zur Rückgewinnung von kryogenem Dampf nach einem der Ansprüche 10 bis 13, das zusätzlich einen weiteren Wärmetauscher (64) zum Erwärmen des Kryogenstroms stromauf des Einlasses (62) durch indirekten Wärmeaustausch mit dem rückgekühlten Kühlmittelstrom aufweist.

15. System zum Rückgewinnen von kryogenem Dampf nach einem der Ansprüche 10 bis 14, wobei ein Ejektor (58) als Mittel zum Hindurchleiten des Kühlmittels zu wirken imstande ist und den Einlaß (62) aufweist.

16. System zum Rückgewinnen von kryogenem Dampf nach einem der Ansprüche 10 bis 15, das zusätzlich einen ventilgesteuerten (52, 52a) Auslaß zum Entlüften eines Teils des erwärmten Kühlmittelstroms aus dem System aufweist.

## Revendications

1. Procédé de récupération cryogénique de vapeur(s) pour extraire des vapeurs condensables d'un flux de gaz contenant les vapeurs, le procédé comprenant :
le passage d'un flux réfrigérant autour d'un circuit dans lequel, dans un premier emplacement, le flux réfrigérant condense les vapeurs condensables du flux de gaz par échange indirect de chaleur avec le flux de gaz, produisant ainsi un flux de gaz réfrigéré, le flux réfrigérant étant chauffé lors de l'échange de chaleur, et dans un second emplacement, au moins une partie du flux réfrigérant chauffé est à nouveau refroidie par échange indirect de chaleur avec le flux de gaz réfrigéré ;
l'utilisation d'un flux cryogénique pour fournir la réfrigération au flux réfrigérant,
***caractérisé en ce qu***'un flux cryogénique est combiné avec au moins une partie du flux réfrigérant à nouveau refroidi en aval du second emplacement et en amont du premier emplacement.

2. Procédé selon la Revendication 1, ***caractérisé en ce que*** le flux cryogénique produit une zone de basse pression dans un venturi afin d'attirer le flux réfrigérant dans le flux cryogénique.

3. Procédé selon la Revendication 1 ou la Revendication 2, dans lequel :
la condensation est réalisée dans deux condenseurs et du givre contenant au moins une partie desdits condensables se forme à l'intérieur desdits deux condenseurs ;
lesdits deux condenseurs fonctionnent selon un cycle dans lequel, tour à tour, chaque condenseur est en réseau et sert à réaliser la condensation et l'autre condenseur est hors réseau et est dégivré pendant qu'il est hors réseau.

4. Procédé selon la Revendication 3, dans lequel chaque condenseur est dégivré pendant qu'il est hors réseau grâce à une fraction au moins dudit flux réfrigérant chauffé.

5. Procédé selon la Revendication 4, comprenant de plus la poursuite du chauffage de ladite fraction du flux réfrigérant chauffé en amont du condenseur hors réseau.

6. Procédé selon l'une quelconque des Revendications 3 à 5, dans lequel :
après dégivrage du condenseur hors réseau, une fraction du flux réfrigérant à nouveau refroidi est prélevée d'en aval de sa combinaison avec le flux cryogénique et est utilisée pour pré-refroidir le condenseur hors réseau, ladite fraction du flux réfrigérant refroidi étant ainsi à nouveau réchauffée, et la fraction ainsi réchauffée étant combinée avec ledit flux réfrigérant chauffé en amont de la seconde étape.

7. Procédé selon la Revendication 4 ou la Revendication 5, dans lequel :
en aval du condenseur hors réseau dégivrant, la fraction du flux réfrigérant chauffé est combinée avec le flux réfrigérant à nouveau refroidi.

8. Procédé selon l'une quelconque des Revendications précédentes, comprenant additionnellement la purge du réfrigérant de traitement avec un débit massique égal à celui auquel le flux cryogénique entre dans le processus.

9. Procédé selon l'une quelconque des Revendications précédentes, dans lequel ledit flux cryogénique est un liquide qui est vaporisé lors de sa combinaison avec ledit flux réfrigérant à nouveau refroidi.

10. Système (1) de récupération cryogénique de vapeur(s) pour extraire d'un flux de gaz des vapeurs condensables contenues dans le flux de gaz, ledit système (1) comprenant :
des moyens condenseurs (16, 22) pour échanger indirectement de la chaleur provenant dudit flux de gaz avec un flux réfrigérant, afin de condenser ainsi lesdites vapeurs condensables dudit flux de gaz et de produire un flux de gaz réfrigéré et un flux réfrigérant chauffé ;
un échangeur de chaleur économiseur (18) raccordé auxdits moyens condenseurs (16, 22) pour échanger encore de la chaleur provenant d'au moins une partie dudit flux réfrigérant chauffé avec ledit flux de gaz réfrigéré et, ainsi, refroidir à nouveau le flux réfrigérant ;
des moyens (58) pour faire passer le réfrigérant autour d'un circuit comprenant les moyens condenseurs (16, 22) et l'échangeur de chaleur économiseur (18), ***caractérisé en ce que*** le système comprend additionnellement une entrée (62) sur le circuit pour un flux cryogénique à combiner avec le flux réfrigérant à nouveau refroidi, ladite entrée (62) étant ménagée en aval de l'échangeur de chaleur économiseur et en amont des moyens condenseurs.

11. Système de récupération cryogénique de vapeur(s) selon la Revendication 10, dans lequel les moyens condenseurs (16, 22) comprennent deux condenseurs, et le système comprend additionnellement des moyens de vanne (24, 26) actionnables pour placer chaque condenseur soit en réseau, soit hors réseau.

12. Système de récupération cryogénique de vapeur(s) selon la Revendication 11, dans lequel les moyens de vanne (24, 26) sont utilisables pour diriger en même temps le flux réfrigérant à nouveau refroidi dans l'un des condenseurs (16, 22) qui est en réseau, et au moins une partie du flux réfrigérant chauffé dans l'autre condenseur (16, 22) qui est hors réseau, afin d'intervertir les routes.

13. Système de récupération cryogénique de vapeur(s) selon la Revendication 12, dans lequel la route du condenseur hors réseau traverse un réchauffeur (48) pour chauffer davantage ladite partie du flux réfrigérant chauffé.

14. Système de récupération cryogénique de vapeur(s) selon l'une quelconque des Revendications 10 à 13, comprenant de plus un autre échangeur de chaleur (64) pour chauffer le flux cryogénique en amont de l'entrée (62) par échange indirect de chaleur avec le flux de réfrigérant à nouveau refroidi.

15. Système de récupération cryogénique de vapeur(s) selon l'une quelconque des Revendications 10 à 14, dans lequel un éjecteur (58) est apte à servir de moyens pour faire circuler le réfrigérant, et comprend l'entrée (62).

16. Système de récupération cryogénique de vapeur(s) selon l'une quelconque des Revendications 10 à 15, comprenant additionnellement une sortie munie d'une vanne (52, 52a) pour purger du système une partie du flux réfrigérant chauffé.
